Europäisches Patentamt

European Patent Office

Office européen des brevets

(19)

(11) Veröffentlichungsnummer : **0 162 253**
**B1**

(12) **EUROPÄISCHE PATENTSCHRIFT**

(45) Veröffentlichungstag der Patentschrift :
07.03.90

(21) Anmeldenummer : 85104131.9

(22) Anmeldetag : 04.04.85

(51) Int. Cl.$^5$ : **F 16 D 23/10**

(54) Zahnkupplung.

(30) Priorität : 27.04.84 CH 2073/84

(43) Veröffentlichungstag der Anmeldung :
27.11.85 Patentblatt 85/48

(45) Bekanntmachung des Hinweises auf die Patenterteilung : 07.03.90 Patentblatt 90/10

(84) Benannte Vertragsstaaten :
FR GB

(56) Entgegenhaltungen :
CH—A— 365 623
CH—A— 413 514
CH—A— 447 731
DE—A— 2 509 673
GB—A— 2 096 719
US—A— 4 053 038

(73) Patentinhaber : Maag-Zahnräder und -Maschinen
Aktiengesellschaft
Hardstrasse 219
CH-8023 Zürich (CH)

(72) Erfinder : Städeli, Otto
Gutschstrasse
CH-6303 Menzingen (CH)

(74) Vertreter : Travnicek, Richard
MAAG-ZAHNRÄDER & -MASCHINEN AG Patentabteilung Hardstrasse 219
CH-8023 Zürich (CH)

EP 0 162 253 B1

## Beschreibung

Die Erfindung betrifft eine bei Synchronlauf selbsttätig einrückende Zahnkupplung, insbesondere zur Übertragung großer Leistungen, nach dem Oberbegriff des Patentanspruchs.

Das Einrücken einer bekannten gattungsgemäßen Zahnkupplung (CH-A-390 007) geschieht in zwei Teilbewegungen. Die erste, schraubenförmige Teilbewegung des einrückenden Kupplungsteils wird von einem Klinkengesperre in Verbindung mit einem Steilgewinde erzeugt. Die zweite Teilbewegung wird durch eine Fremdkraft bewirkt. Das Klinkengesperre, bestehend aus Klinken und einem Klinkenrad, führt den gleichen axialen Weg aus wie der einrückende Kupplungsteil. Während der ersten Teilbewegung steht eine Klinke mit einem Klinkenradzahn in Eingriff; beide führen die gleiche Schraubbewegung bezüglich des anderen Kupplungsteils aus.

Sobald die Zahnflanken der miteinander in Eingriff kommenden Verzahnungen sich am Ende der ersten Teilbewegung berühren, kann sich der einrückende Kupplungsteil samt in ihm gelagerten Klinken nur noch in axialer Richtung gegenüber dem anderen Kupplungsteil bewegen. Das Klinkenrad jedoch, das in axialer Richtung mitgenommen wird, führt entsprechend dem Steilgewinde, mit dem es in Eingriff steht, weiterhin eine Schraubbewegung aus. Dabei dreht sich das Klinkenrad gegenüber den Klinken, wodurch die während der ersten Teilbewegung belastete Klinke in erwünschter Weise entlastet wird.

Die Größe der Drehung des Klinkenrades gegenüber den Klinken ergibt sich einerseits aus dem Schrägungswinkel des Steilgewindes und andererseits aus der axialen Strecke der zweiten Teilbewegung, die ihrerseits von der Breite der miteinander in Eingriff kommenden Verzahnungen abhängt. Je größer die Zahnbreite und somit die genannte Strecke ist, umso größer ist der relative Drehwinkel. Dieser Drehwinkel muß bei der Festlegung der Anzahl Klinken und Klinkenradzähne (maßgebende Größe ist das Produkt aus Anzahl Klinken und Anzahl Klinkenradzähne) berücksichtigt werden, um zu verhindern, daß während der zweiten Teilbewegung ein Klinkenradzahn unter einer Klinke hinweggleitet. Wäre dies der Fall, so würde beim Ausrükken der Kupplung die betreffende Klinke in den Klinkenradzahn einrasten und die Ausrückbewegung blockieren.

Da aus dynamischen Gründen ein großer Schrägungswinkel erwünscht ist und die Zahnbreite, also auch die Strecke der zweiten Teilbewegung, vom zu übertragenden Drehmoment bestimmt wird, muß das Produkt aus Anzahl Klinken und Anzahl Klinkenradzähne kleingehalten werden. Dies bedeutet aber, daß der Winkel zwischen zwei möglichen Klinkeneingriffen, der sogenannte Überholungswinkel, groß wird, wodurch beim Einrücken mit großer Winkelbeschleunigung ein starker Stoss an der einrastenden Klinke entstehen kann, was eine Gefährdung des Klinkengesperres bedeutet.

Um derartige Nachteile zu vermeiden, hat man versucht, Steilgewinde durch eine kombinierte Schräg- und Geradverzahnung zu ersetzen (CH-A-447 731). Damit kann man zwar den Bewegungsablauf so steuern, dass kurz nach Beginn der ersten Teilbewegung die Schraubbewegung des Klinkenrades beendet wird und der Rest dieser Teilbewegung als rein axiale Bewegung ausgeführt wird. Dadurch kann der Ueberholwinkel auf einem kleinen Wert gehalten werden; zudem wird der Ueberholwinkel unabhängig vom Schrägungswinkel und vom zurückzulegenden axialen Weg. Diese Konstruktion ist jedoch aufwendig und erfordert eine grosse Baulänge, die besonders dann von Nachteil ist, wenn es darum geht, eine solche Zahnkupplung mit einer weiteren, insbesondere hydrodynamischen Kupplung zu kombinieren.

Eine bekannte Zahnkupplung (DE-A-31 42 797) mit einer Einrück-Servovorrichtung enthält einen Kupplungsstern, der im wesentlichen die Form eines Rohrstückes hat, das an seinen beiden Enden je eine gerade Außenverzahnung aufweist, von denen die eine ständig in eine an der treibenden Welle ausgebildete gerade Innenverzahnung eingreift und die andere in eine an der getriebenen Welle ausgebildete Innenverzahnung einrückbar ist. Etwa in der Mitte zwischen den beiden Außenverzahnungen ist an der Innenseite des Rohrstückes eine als Innenverzahnung ausgebildete Klinkenverzahnung angeordnet. Das Klinkengesperre ist so angeordnet, dass es einrastet, wenn die Drehzahl der antriebsseitigen Kupplungshälfte bei Vorwärtsdrehung kleiner wird als die Drehzahl der abtriebsseitigen Kupplungshälfte. Sobald die Antiebs-Drehzahl nur geringfügig die Abtriebs-Drehzahl unterschreitet, wird das Klinkengesperre wirksam und die Schraubmuffe beginnt sich gemeinsam mit dem Kupplungsstern und der mit diesem in ständigem Zahneingriff stehenden ersten Kupplungshälfte zu drehen, womit eine Relativdrehung gegenüber der zweiten Kupplungshälfte, und somit eine Schraubbewegung, ausgeführt wird, bei der die Schraubmuffe einerseits — gegebenenfalls nach Ueberwindung eines mehr oder weniger grossen Axialspiels — den Kupplungsstern in axialer Richtung mitnimmt und andererseits — entweder unmittelbar oder über den Kupplungsstern — den Servomotor so steuert, dass dieser den Kupplungsstern vollends in seine Einrückstellung bewegt. Unmittelbar darauf kann die Drehzahl der normalerweise und nun wieder treibenden ersten Welle durch Hochfahren der Antriebsmaschine wieder erhöht werden, ohne dass diese Drehzahl jemals merklich unter die ursprüngliche Drehzahl der zweiten Welle abgesenkt worden wäre.

Aufgabe der Erfindung ist es, eine Zahnkupplung der gattungsgemässen Art derart weiterzubilden, dass sie unabgängig von der Verzahnungsbreite einen kleinen Ueberholungswinkel und eine äusserst kurze Baulänge ermöglicht und daher vorteilhafterweise in Verbindung mit einer hydrodynamischen Kupplung zur Uebertragung sehr grosser Drehmomente einsetzbar ist.

Erfindungsgemäss wird diese Aufgabe mit den kennzeichnenden Merkmalen des Patentanspruchs gelöst.

Ein Ausführungsbeispiel der Erfindung wird im folgenden anhand schematischer Zeichnungen mit weiteren Einzelheiten erläutert. Es zeigen, jeweils in axialem Schnitt

Fig. 1 eine Kupplungsanordnung mit einer erfindungsgemässen Zahnkupplung innerhalb einer hydrodynamischen Kupplung

Fig. 2a-2d einen Schaltzyklus der Zahnkupplung : In Fig. 2a ist mit dem Einrücken noch nicht begonnen, die Kupplung ist jedoch in Bereitschaftsstellung ; in Fig. 2b ist das Einrücken kurz vor dem Ende einer ersten Teilbewegung ; in Fig. 2c ist das Einrücken beendet und in Fig. 2d beginnt das Ausrücken.

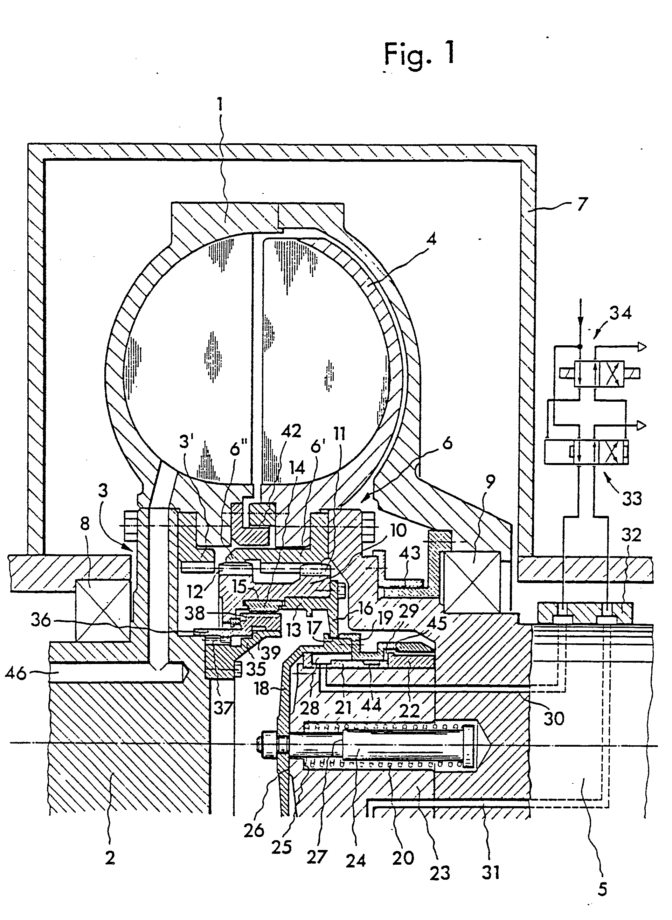

Zu der in Fig. 1 dargestellten Kupplungsanordnung gehört eine hydrodynamische Kupplung, im folgenden Strömungskupplung genannt, mit einem gehäuseartigen Primärteil 1, das mit einer Antriebswelle 2 und einem an dieser befestigten ersten Kupplungsteil 3 einer Zahnkupplung fest verbunden ist. Das Kupplungsteil 3 weist einen geradverzahnten Zahnkranz 3' auf. Innerhalb des Primärteils 1 der Strömungskupplung ist ein Sekundärteil 4 angeordnet, das mit einer Abtriebswelle 5, z. B. einer Schiffspropellerwelle, und einem zweiten Kupplungsteil 6 der Zahnkupplung fest verbunden ist. Der zweite Kupplungsteil 6 hat einen ebenfalls geradverzahnten Zahnkranz 6'. Die Abtriebswelle 5 ist in nicht dargestellter, üblicher Weise in einem Gehäuse 7 gelagert ; die Antriebswelle 2 ist über ein Lager 8 ebenfalls im Gehäuse 7 sowie über ein Lager 9 auf der Abtriebswelle 5 gelagert.

Die Zahnkupplung hat einen axial beweglichen Kupplungsstern 10, der an seinen beiden Enden je eine gerade Verzahnung 11 bzw. 12 aufweist. Die Verzahnung 11 ist ständig in Eingriff mit dem abtriebsseitigen Zahnkranz 6' ; die andere Verzahnung 12 ist durch axiale Verschiebung des Kupplungssterns 10 in den antriebsseitigen Zahnkranz 3' einrückbar. In ausgerückter Stellung ist der Kupplungsstern 10 einerseits durch Verzahnungeingriff des Zahnkranzes 6' in der Verzahnung 11 und andererseits durch einen glatten Fortsatz 6'' des Zahnkranzes 6' am Außendurchmesser der Verzahnung 12 radial abgestützt. In eingerückter Stellung ist der Kupplungsstern 10 in beiden Verzahnungen 11 und 12 durch den zugehörigen Zahnkranz 6' bzw. 3' abgestützt.

Mit dem Kupplungsstern 10 ist ein Käfigring 13 fest verbunden ; beide zusammen bilden Kammern, in denen. Klinken 14 radial und tangential abgestützt und so gelagert sind, daß sie eine kleine Kippbewegung um je eine zur Drehachse der Kupplungsanordnung parallele Kippkante 15 ausführen können. Am Käfigring 13 ist ein Kamm 16 ausgebildet, der mit axialem und radialem Spiel in eine ringförmige Nut 17 eingreift, welche durch zwei Ringkolbenteile 18 und 19 gebildet wird. Die beiden Ringkolbenteile 18 und 19 sind miteinander fest verbunden und bilden gemeinsam einen Ringkolben 18/19 einer hydraulischen Kolben-Zylinderanordnung. Durch den Eingriff des Kamms 16 in die Nut 17 lassen sich im Ringkolben 18/19 erzeugte Kräfte sowie die Kraft einer Feder 20 auf den Kupplungsstern 10 übertragen. Die Ringkolbenteile 18 und 19 sind axial verschiebbar auf zwei Zylinderteilen 21 und 22 geführt, die ihrerseits durch einen Führungszapfen 23 fest mit der Abtriebswelle 5 verbunden sind.

Die Feder 20 ist als Druckfeder ausgebildet und in einer zentralen Bohrung des Führungszapfens 23 angeordnet, wo sie zwischen einem abtriebsseitig angeordneten Kopf eines Bolzens 24 und einem im Führungszapfen 23 ausgebildeten Anschlag 25 eingespannt ist. Der Bolzen 24 ist mit dem Ringkolbenteil 18 verschraubt. In drucklosem Zustand der Kolben-Zylinderanordnung hält die Feder 20 über den Ringkolben 18/19 den Kupplungsstern 10 in ausgerückter Stellung, die durch einen Anschlag 26 an der freien Stirnseite des Führungszapfens 23 festgelegt ist. Der Anschlag 25 bestimmt zusammen mit einer Schulter 27 des Bolzens 24 die Endstellung der eingerückten Zahnkupplung.

Die Ringkolbenteile 18 und 19 bilden mit den Zylinderteilen 21 und 22 zwei ringförmige Kammern 28 und 29. Wenn die Zahnkupplung eingerückt werden soll, wird der Kammer 29 Drucköl über eine Leitung 31 zugeführt, nachdem Kupplungsstern 10 und Ringkolben 18/19 einen vorbestimmten axialen Weg selbständig zurückgelegt haben. Der Kammer 28 wird Drucköl über eine Leitung 30 zugeführt, wenn die Zahnkupplung ausgerückt werden soll. Die Kanäle 30 und 31 werden über einen stillstehenden Öleinführring 32 gespeist, der die Abtriebswelle 5 umschließt. Dem Öleinführring 32 ist ein Steuerventil 33 vorgeschaltet, das von einem Magnetventil 34 hydraulisch gesteuert wird.

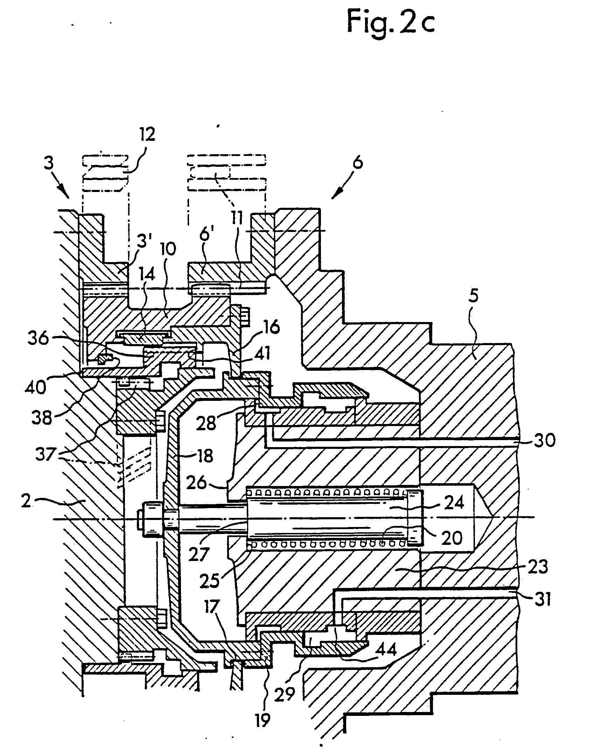

Mit der Antriebswelle 2 ist ein Klinkenradträger 35 fest verbunden, auf dem ein Klinkenrad 36 gelagert und mittels einer Schrägverzahnung 37 verschraubbar geführt ist. In ausgerückter Stellung ist das Klinkenrad 36 gemäß Fig. 1 axial mit geringem Spiel zwischen zwei Anschlägen 38 und 39 gehalten, von denen der Anschlag 38 am Kupplungsstern 10 und der Anschlag 39 am Klinkenradträger 35 ausgebildet ist. In eingerückter Stellung ist das Klinkenrad 36 gemäß Fig. 2c mit axialem Spiel zwischen zwei Anschlägen 40 und 41 gehalten, von denen der Anschlag 40 am ersten Kupplungsteil 3 und der Anschlag 41 um Kupplungsstern 10 ausgebildet ist.

Der Raum, in dem die Zahnkupplung angeordnet ist, wird durch Dichtungen 42 und 43 vom Ölraum der Strömungskupplung getrennt ; Lecköl und Schmieröl der Zahnkupplung werden über nicht dargestellte Bohrungen abgeführt. Als Verbindung zwischen der Leitung 31 und der Kammer 29 ist eine ringförmige Nut 44 vorgesehen, die in ausgerückter Stellung gemäß Fig. 1 von einem zylindrischen Abschnitt des Ringkolbenteils 19 abgedeckt ist. In dieser Stellung ist die Kammer 29 durch einen ringförmigen Spalt 45 vom Drucköl entlastet. Zum Füllen und Entleeren der Strömungskupplung ist in das erste Kupplungsteil 3 ein Kanal 46 eingearbeitet.

Die Zahnkupplung ist mit einer nicht dargestellten Stellungsanzeige ausgerüstet, die in Verbindung mit Endschaltern die Signale « Zahnkupplung EIN » und « Zahnkupplung AUS » gibt.

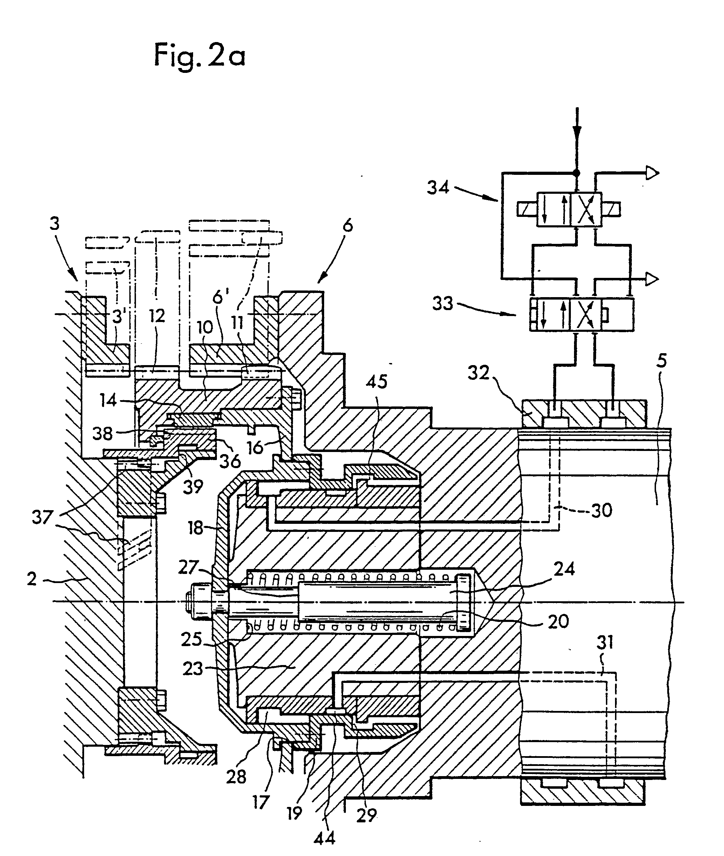

Die Funktionsweise der Kupplungsanordnung wird im folgenden anhand eines Schaltzyklus erklärt, wobei die Fig. 1 und 2a bis 2d aufeinanderfolgende Schaltstellungen zeigen. Es sei angenommen, eine mit der Antriebswelle 2 verbundene Antriebsmaschine, z. B. ein Schiffsdieselmotor, stehe still, die Strömungskupplung sei entleert, die Zahnkupplung ausgerückt und das Magnetventil 34 sei auf « AUS » gestellt. Die Antriebsmaschine werde nun gestartet und die Strömungskupplung gefüllt, wodurch die Abtriebswelle 5 angetrieben wird.

Bedingt durch den Schlupf der Strömungskupplung dreht sich die Abtriebswelle 5 langsamer als die Antriebswelle 2. Das Klinkenrad 36 gleitet unter den Klinken 14 hinweg und ist dabei zwischen den Anschlägen 38 und 39 mit Spiel axial geführt. Durch den Füllungsgrad der Strömungskupplung kann bei konstanter Antriebsdrehzahl die Abtriebsdrehzahl in weiten Grenzen variiert werden, wobei die erstere im Betrieb immer größer ist als die letztere. Die Zahnkupplung wird durch eine von Öldruck in der Kammer 28 erzeugte hydraulische Kraft und durch die Kraft der Feder 20 in ausgerückter Stellung gehalten. Die Kammer 29 ist drucklos.

Für das Umschalten der Antriebsgruppe auf schlupflosen Betrieb wird als erstes das Magnetventil 34 elektrisch umgesteuert (siehe Fig. 2a). Dadurch wird die Kammer 28 drucklos, der Ringkolben 18/19 ist hydraulisch im Gleichgewicht. Der Kupplungsstern 10 wird durch die Kraft der Feder 20 noch in ausgerückter Stellung gehalten. Durch den Kanal 31 wird Drucköl in die ringförmige Nut 44 geführt. Die Drehzahl der Antriebsmaschine wird nun soweit gesenkt, bis die Antriebswelle 2 geringfügig hinter der Abtriebswelle 5 zurückbleibt. Infolgedessen greift eine der Klinken 14 in einen Zahn des Klinkenrades 36, und es wird nun ein geringes Drehmoment von der Abtriebswelle 5 über den Zahneingriff 6'/11, die eingerastete Klinke 14, das Klinkenrad 36 und die Schrägverzahnung 37 auf die Antriebswelle 2 übertragen.

Das erwähnte kleine Drehmoment erzeugt in der Schrägverzahnung 37 eine Axialkraft, die das Klinkenrad 36 gegenüber der Antriebswelle 2 schraubenförmig verschiebt. Über den Anschlag 38 wird der Kupplungsstern 10 und, über Kamm 16 und Nut 17, der Ringkolben 18/19 mitgenommen. Der Kupplungsstern 10 führt die gleiche Schraubbewegung aus wie das Klinkenrad 36, da die Klinke 14 durch das Drehmoment im Eingriff mit dem Klinkenrad 36 gehalten wird.

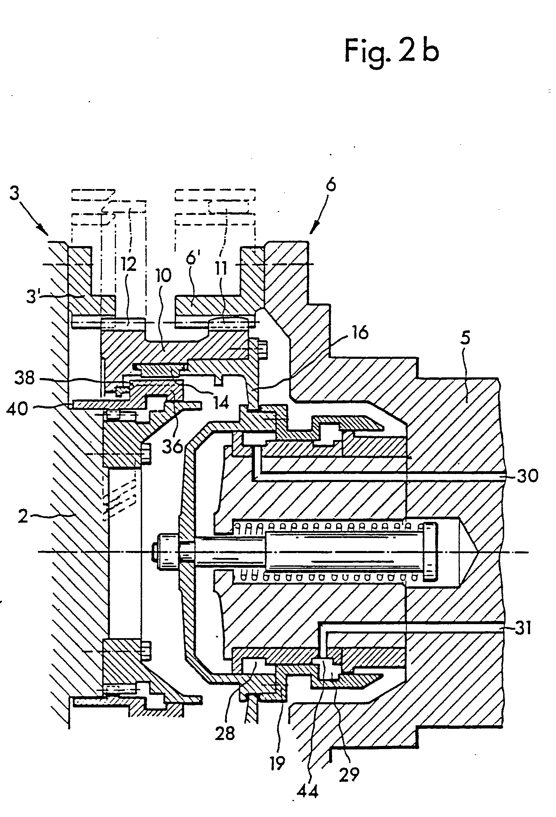

Die Stirnseiten der Verzahnung 12 und des Zahnkranzes 3' sind angeschrägt, so daß diese bei der relativen Schraubbewegung in Eingriff kommen, ohne anzuecken. Sobald diese Verzahnungen axial eine bestimmte Überdeckung aufweisen, und kurz bevor ihre Zahnflanken sich berühren (siehe Fig. 2b) gibt der Ringkolbenteil 19 die ringförmige Nut 44 frei und schließt gleichzeitig den ringförmigen Spalt 45, so daß sich in der Kammer 29 ein Öldruck aufbauen kann. Die von diesem erzeugte Kraft beschleunigt den Kupplungsstern 10 in axialer Richtung. Das Öl in der Kammer 28 kann über Leitung 30, Öleinführring 32, Steuerventil 33 und Magnetventil 34 ausströmen.

Sobald die Zahnflanken der Verzahnung 12 und diejenigen des Zahnkranzes 3' einander berühren, wird die im Eingriff stehende Klinke 14 entlastet. Der Kupplungsstern 10 wird weiterhin durch die hydraulische Kraft axial verschoben, die axiale Bewegung des Klinkenrades 36 wird jedoch durch den Anschlag 40 gestoppt und es entsteht Spiel zwischen dem Klinkenrad 36 und dem Anschlag 38. Die Verzahnung 12 des Kupplungssterns 10 wird durch die hydraulische Kraft des Ringkolbens 18/19 mit dem Zahnkranz 3' voll in Eingriff gebracht. Die Endstellung ist erreicht, wenn die Schulter 27 des Bolzens 24 am Anschlag 25 des Führungszapfens 23 anliegt (siehe Fig. 2c). Der Kupplungsstern 10 wird nun über die ringförmige Nut 17 und den Kamm 16 in eingerückter Stellung gehalten. Das Klinkenrad 36 ist mit geringem Spiel zwischen den Anschlägen 40 und 41 axial gehalten.

Der Einrückvorgang ist jetzt beendet. Aufgrund des Signals « Zahnkupplung EIN » wird die Strömungskupplung entleert; die Drehzahl der Antriebsmaschine kann erhöht werden. Die Leistung wird schlupflos übertragen von der Antriebswelle 2 über Zahnkranz 3', Verzahnung 12, Kupplungsstern 10, Verzahnung 11, Zahnkranz 6' auf die Antriebswelle 5. Da die Verzahnungen 11 und 12 Geradverzahnungen sind, können Drehmomente in beiden Richtungen (von Welle 2 auf Welle 5 und umgekehrt) übertragen werden, ohne daß am Kupplungsstern 10 axiale Kräfte wirken. Eventuell auftretende Achsversetzungen zwischen den Wellen 2 und 5 werden vom Kupplungsstern 10 aufgenommen wie bei normalen Zahnkupplungen.

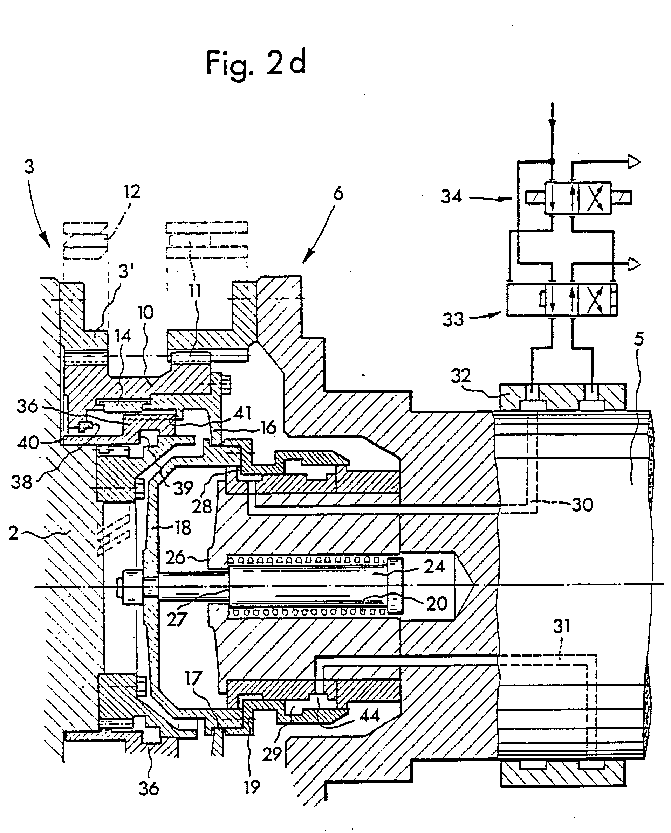

Um die Zahnkupplung auszurücken, wird zuerst die Leistung der Antriebsmaschine auf Leerlauf reduziert. Sobald die Drehzahl der Abtriebswelle 5 den der Leerlaufleistung entsprechenden Wert erreicht, wird das Magnetventil 34 elektrisch umgesteuert (siehe Fig. 2d). Dadurch wird die Kammer 29 drucklos, andererseits baut sich in der Kammer 28 ein Druck auf. Dieser erzeugt eine am Ringkolben 18/19 wirkende Kraft, die diesen und über Nut 17 und Kamm 16 den Kupplungsstern 10 axial in Ausrückrichtung bewegt. Das Öl in der Kammer 29 kann über Leitung 31, Öleinführring 32, Steuerventil 33 und Magnetventil 34 ausströmen. Wenn der Kupplungsstern 10 eine gewisse Strecke zurückgelegt hat, kommt der Anschlag 38 in Berührung mit dem Klinkenrad 36, und dieses

wird nun vom Kupplungsstern 10 in die ausgerückte Stellung mitgenommen. Kurz vor Ende der Ausrückbewegung schließt der Ringkolbenteil 19 die Nut 44 ; gleichzeitig öffnet sich wieder der Spalt 45, durch den das restliche Öl aus der Kammer 29 entweichen kann. Die Ausrückbewegung wird durch den Anschlag 26 gestoppt, das Klinkenrad 36 wird mit Spiel zwischen den Anschlägen 38 und 39 axial gehalten. Die Drehzahl der Abtriebswelle 5 beginnt zu sinken, sobald die Verzahnung 12 außer Eingriff ist mit dem Zahnkranz 3'. Aufgrund des Signals « Zahnkupplung AUS » wird die Strömungskupplung gefüllt ; die Drehzahl der Antriebsmaschine kann nun wieder erhöht werden. Die Leistung wird von der Flüssigkeitskupplung übertragen.

## Patentanspruch

Zahnkupplung mit

einem ersten und einem zweiten verzahnten Kupplungsteil (3, 6), von denen jeweils eines mit dem Primär-beziehungsweise Sekundärteil (1, 4) einer Strömungskupplung verbunden ist,

einem axial verschiebbaren, verzahnten Kupplungsstern (10), der in den ersten Kupplungsteil (3) einrückbar ist und mit dem zweiten Kupplungsteil (6) ständig in Zahneingriff steht, wobei der Kupplungsstern (10) mit einer Schalteinrichtung (18-34) verbunden ist, die nach beginnendem Zahneingriff das Einrücken vollendet,

einem Klinkenrad (36), das am ersten Kupplungsteil (3) axial verschraubbar geführt ist,

Klinken (14) zwischen Kupplungsstern (10) und Klinkenrad (36), von denen jeweils eine Klinke einrastet, wenn bei ausgerückter Kupplung ein bestimmtes der Kupplungsteile das andere überholt, wodurch das Klinkenrad (36) im Einrücksinn verschraubt wird,

und axialen Anschlägen (38, 41) am Kupplungsstern (10), von denen ein Anschlag (38) beim Verschrauben im Einrücksinn dafür sorgt, dass der Kupplungsstern (10) vom Klinkenrad (36) axial mitgenommen wird, und der andere Anschlag (41) im eingerückten Zustand des Kupplungssterns (10) das Klinkenrad (36) an einer Rückbewegung hindert,
dadurch gekennzeichnet, dass

die axiale Strecke, auf der das Klinkenrad (36) verschraubbar ist, zusätzlich durch zwei Anschläge (39, 40) am ersten Kupplungsteil (3) begrenzt ist, von denen ein Anschlag (40) die Verschraubung im Einrücksinn bei beginnendem Zahneingriff zwischen Kupplungsstern (10) und erstem Kupplungsteil (3) beendet

und die Anschläge (38, 41) am Kupplungsstern (10) gegenüber dem Klinkenrad (36) ein zur Vollendung des Einrückens durch die Schalteinrichtung ausreichendes Spiel haben.

## Claim

Toothed clutch, comprising :

a first and a second toothed clutch part (3, 6), of which each is connected to the primary and secondary part (1, 4) respectively of a fluid coupling,

an axially displaceable, toothed clutch star (10) which can be engaged with the first clutch part (3) and is in constant mesh with the second clutch part (6), the clutch star (10) being connected to an operating mechanism (18-34) which, once meshing starts, completes the engagement,

a ratchet wheel (36) which is guided in an axially screwable manner on the first clutch part (3),

pawls (14) between clutch star (10) and ratchet wheel (36), of which one pawl engages in each case when, with the clutch disengaged, one particular clutch part overtakes the other clutch part, as a result of which the ratchet wheel (36) is screwed in the engagement direction,

and axial stops (38, 41) on the clutch star (10), of which one stop (38), during screwing in the engagement direction, ensures that the clutch star (10) is axially carried along by the ratchet wheel (36), and the other stop (41), in the engaged state of the clutch star (10), prevents the ratchet wheel (36) from moving back,
characterized in that :

the axial distance over which the ratchet wheel (36) can be screwed is additionally limited by two stops (39, 40) on the first clutch part (3), of which one stop (40) ends the screwing in the engagement direction when meshing begins between clutch star (10) and first clutch part (3),

and the stops (38, 41) on the clutch star (10), relative to the ratchet wheel (36), have a clearance lasting until engagement is completed by the operating mechanism.

## Revendication

Embrayage à dents comportant

une première et d'une seconde parties d'embrayage dentée (3, 6), dont chacune est reliée à la partie primaire, secondaire, respectivement (1, 4) d'un embrayage hydraulique,

une étoile d'embrayage dentée, déplaçable axialement (10), qui peut être engrenée dans la première partie d'accouplement (3) et se trouve en engrènement permanent avec la seconde partie d'embrayage (6), l'étoile d'embrayage (10) étant reliée à un dispositif de commutation (18-34), qui après le début de l'engrènement achève l'engrènement,

une roue à rochet (36), qui est guidée de façon hélicoïdale axialement sur la première partie d'embrayage (3),

de cliquets (14) entre l'étoile d'embrayage (10) et la roue à rochet (36), dont chacun est en prise avec un cliquet lorsque l'embrayage est désaccouplé, une partie déterminée des parties d'embrayage dépasse l'autre, de telle sorte que la roue à rochet (36) soit déplacée hélicoïdalement dans le sens de l'engrènement,

et des butées axiales (38, 41) sur l'étoile d'embrayage (10), dont une butée (38) assure dans le cas du vissage dans le sens de l'engrènement que l'étoile d'embrayage (10) soit entraînée axialement par la roue à rochet (36), et l'autre butée (41) dans l'état engrené de l'étoile d'embrayage (10) empêche un mouvement de recul de la roue à rochet (36),
caractérisé en ce que,
la course axiale sur laquelle la roue à rochet (36) peut être vissée est limitée en outre par deux butées (39, 40) sur la première partie d'embrayage (3) dont une butée (40) met fin au vissage dans le sens de l'engrènement lors de l'engrènement commençant entre l'étoile d'embrayage (10) et la première partie d'embrayage (3),

et les butées (38, 41) sur l'étoile d'embrayage (10) possèdent vis-à-vis de la roue à rocher (36) un jeu suffisant en vue de l'achèvement de l'engrènement par le dispositif de commutation.

# Fig. 1

# Fig. 2a

Fig. 2b

# Fig. 2c

# Fig. 2d